# EUROPEAN PATENT APPLICATION

(11) **EP 1 267 434 A2**
(43) Date of publication of application: **18.12.2002**
(21) Application number: 02254141.1
(22) Date of filing: 13.06.2002
(51) Int. Cl.: H01M 8/02, H01M 8/24

(54) **Fuel cell and its production method**

(30) Priority: 13.06.2001 JP 2001178083; 13.02.2002 JP 2002034939
(71) Applicant: MATSUSHITA ELECTRIC INDUSTRIAL CO., LTD., Kadoma-shi, Osaka 571-8501 (JP)
(72) Inventor: Ohara, Hideo, Katano-shi, Osaka 576-0016 (JP); Hatoh, Kazuhito, Osaka-shi, Osaka 536-0015 (JP); Hase, Nobuhiro, Kawanishi-shi, Hyogo 666-0007 (JP); Kusakabe, Hiroki, Sakai-shi, Osaka 590-0113 (JP); Takeguchi, Shinsuke, Kadoma-shi, Osaka 571-0074 (JP); Kobayashi, Susumu, Ikoma-shi, Nara 630-0134 (JP); Tomita, Katsumi, Katano-shi, Osaka 576-0014 (JP); Yamazaki, Tatsuto c/o Sugou, Masayo, Suginami-ku, Tokyo 168-0063 (JP); Murakami, Hikaru, Saijo-shi, Ehime793-0072 (JP); Takezawa, Mikio, Kanonji-shi,Kagawa 768-0040 (JP); Kobayashi, Hiroshi, Mitoyo-gun, Kagawa 769-1102 (JP); Onishi, Takayuki, Kanonji-shi, Kagawa 768-0033 (JP); Matsuoka, Hiroaki, Kanonji-shi, Kagawa 768-0063 (JP)
(74) Representative: Nachshen, Neil Jacob

(57) **Abstract**

A method of producing a fuel cell comprising the steps of: (A) molding a separator having a gas flow channel or a cooling water flow channel by injection molding process having a step of injecting a mixture comprising one or more conductive inorganic materials and one or more resins into a mold; (B) producing an assembly comprising an electrolyte and a pair of electrodes sandwiching the electrolyte; and (C) combining the separator with the assembly to produce a fuel cell.

## Description

### BACKGROUND OF THE INVENTION

Fuel cells generate electric power and heat simultaneously by electrochemically reacting a fuel gas containing hydrogen and an oxidant gas containing oxygen such as air. The following will describe a common manufacturing procedure of fuel cells, taking a polymer electrolyte fuel cell as an example.

First, a catalytic reaction layer composed of carbon particles carrying a platinum group metal catalyst is formed on each side of a polymer electrolyte membrane for selectively transporting hydrogen ions. Next, a diffusion layer having both fuel gas permeability and electronic conductivity is formed on an outer surface of each of the catalytic reaction layers. The diffusion layer is composed of, for example, carbon paper. The diffusion layer and the catalytic reaction layer constitute an electrode.

Thereafter, in order to prevent a fuel gas and an oxidant gas from leaking out or mixing together, gas sealing materials or gaskets are arranged so as to surround the electrodes and sandwich the periphery of the polymer electrolyte membrane. The gas sealing materials or gaskets are combined integrally with the electrodes and polymer electrolyte membrane. This is called membrane electrode assembly (hereinafter referred to as MEA). Disposed outside the MEA are conductive separators for securing the MEA and connecting adjacent MEAs electrically in series. The separators have, at a portion to come in contact with the MEA, a gas flow channel formed for supplying a reactant gas to the electrode and removing generated water and an excess gas. Although the gas flow channel may be produced separately from the separators, grooves are usually formed on the surfaces of the separators to serve as the gas flow channel.

In order to supply the grooves with the fuel gas, it is necessary to use a piping jig, between the grooves and a gas supply pipe, which branches out, depending on the number of the separators used, into the grooves of the respective separators. This type of piping jig, directly connecting the gas supply pipe to the grooves of the separators, is specifically called "external manifold". A manifold having a simpler structure is called "internal manifold". The internal manifold is formed by through holes of the separators having a gas flow channel formed thereon, and the through holes are connected to the inlet and outlet of the gas flow channel such that the gas is supplied and discharged directly from and to these through holes.

Since fuel cells generate heat during operation, they need to be cooled in order to keep good temperature conditions. Thus, it is common to insert a cooling-water-circulating-section between the separators every one to three cells or to form a cooling water flow channel on the backside of predetermined separators.

The MEAs and separators are alternately stacked with cooling sections to form a stack of 10 to 200 cells. Subsequently, the resultant cell stack is sandwiched by a pair of end plates with a current collector plate and an insulating plate interposed between the cell stack and each end plate, and is clamped with clamping bolts.

Conventionally, the cell stack is clamped by a pressure of about 10 to 20 kg/cm² in order to reduce the contact resistance between the MEAs and the separators and to ensure gas tightness. Therefore, it is common to use end plates composed of a metal material having excellent mechanical strength and secure the cell stack from both ends with clamping bolts combined with springs. Also, stainless steel having excellent corrosion resistance is used for the end plates since part of the end plates comes in contact with the gases and cooling water supplied to the electrodes. As the current collector plates, a metal material having a higher conductivity than carbon materials is used. The current collector plates are subjected to a surface treatment in some cases in order to lower the contact resistance. The end plates, arranged on both ends of the cell stack, are electrically connected via the clamping bolts, and the insulating plate is therefore inserted between the current collector plate and the end plate.

In such a polymer electrolyte fuel cell, the separators need to have high conductivity and high gas tightness. In addition, the separators need to have high resistance to acids so as not to be corroded by oxidation/reduction reactions of hydrogen and oxygen. For such reasons, conventional separators are usually composed of a dense carbon plate having no gas permeability, the carbon plate having a gas flow channel formed by cutting. These separators, however, are quite expensive and have insufficient mechanical strength. Thus, especially when a fuel cell including such separators is used for a power source of an electric vehicle, the separators may become cracked due to vibrations and bumps while the vehicle is driving.

Recently, an attempt is being made to use a metal plate such as a stainless steel plate for the separator. However, since the separator is exposed to an acidic atmosphere at high temperatures, the separator composed of the metal plate is corroded when used over a long term. When the metal plate is corroded, the electrical resistance increases at the corroded part, resulting in a decrease in cell output. Also, metallic ions dissolve out of the metal plate to disperse into the polymer electrolyte membrane, and when the metallic ions are trapped at ion-exchanging sites thereof, the hydrogen-ion conductivity of the polymer electrolyte membrane deteriorates. In order to avoid such deterioration, the surface of the metal plate is plated with gold, but a separator composed of the metal plate plated with gold is expensive.

There is also a separator produced by hot pressing a conductive resin composition with a stamping die having a gas flow channel pattern. For example, the Japanese Laid-Open Patent Publication No. Hei 6-333580 proposes a separator formed from a conductive resin composition comprising a thermosetting resin such as epoxy resin and a metal powder. Also, the use of a conductive resin composition comprising a thermoplastic resin and a conductive powder is being examined. When a thermoplastic resin is used, however, problems arise since polypropylene, polyethylene and the like have insufficient thermal resistance and polybutylene terephthalate is susceptible to hydrolysis. Also, conductivity and moldability are mutually incompatible in polyphenylene sulfide and liquid crystal polymers. Further, the use of polyamide resins represented by the following formulae (a) and (b) having favorable moldability and thermal resistance, produce a problem with respect to gas emission and dimensional stability.

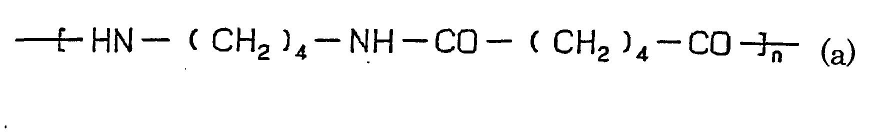

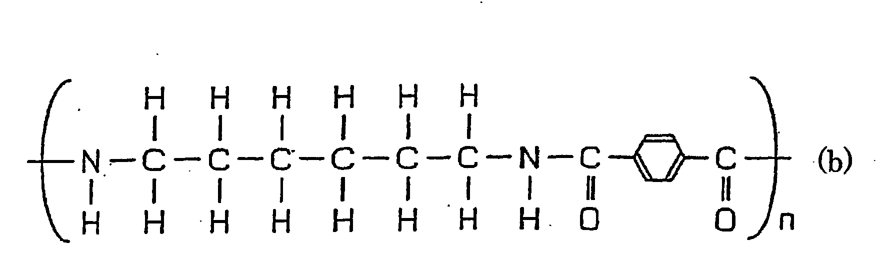

Moreover, when the conductive resin composition is hot pressed to produce separators, the productivity is low and reduction of the production cost therefore requires a significant capital investment. This is because, in the case of a thermosetting resin, the conductive resin composition needs to be retained for at least a few minutes in a heated mold until the thermosetting resin cures. In the case of hot press molding of a thermoplastic resin, the mold needs to be cooled until the softened thermoplastic resin cures before the molded article is ejected from the mold. Further, the cooled mold needs to be re-heated before it is used for the next hot press molding. Furthermore, it is difficult to homogeneously charge the conductive resin composition into the mold, control the fluidity of the conductive resin composition during hot pressing and manage the dimensional accuracy of the molded article. The practical limit of dimensional accuracy is about ±50 µm. When the separators are produced with poor dimensional accuracy and stacked with MEAs to form a fuel cell stack, gas sealing materials or gaskets are unable to seal the fuel cell stack effectively.

### BRIEF SUMMARY OF THE INVENTION

The present invention relates to a method of producing a fuel cell comprising the steps of: (A) molding a separator having a gas flow channel and/or a cooling water flow channel by injection molding process having a step of injecting a mixture comprising one or more conductive inorganic materials and one or more resins into a mold; (B) producing an assembly comprising an electrolyte and a pair of electrodes sandwiching the electrolyte; and (C) combining the separator with the assembly to produce a fuel cell.

The step (A) preferably comprises a step of injecting the mixture into the mold while applying a vibration of 10 kHz or more to the mold.

The above-mentioned injection molding process is preferably injection compression molding process.

The mold preferably has a film gate, and the film gate is preferably formed along (or almost or substantially along) a plane on which a separator-accommodating-cavity of the mold is positioned.

It is preferred that the mold has a plurality of pin gates and that the plurality of pin gates are formed substantially perpendicularly to a plane on which a separator-accommodating-cavity of the mold is positioned.

The mold is preferably a hot runner mold.

The one or more resins preferably comprise one or more thermoplastic resins.

The thermoplastic resin is preferably at least one selected from the group consisting of polyphenylene sulfide, liquid crystal polymer, polypropylene and polyamide.

The polyamide preferably has an amide structure represented by the following formula (1): 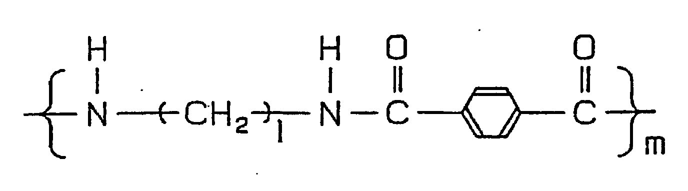 wherein 1 is an integer of 5 or more and m representing polymerization degree is an integer of 100 or more.

The one or more conductive inorganic materials preferably comprise graphite.

The mixture flows in the mold preferably in a direction substantially parallel to the longest linear part of the gas flow channel or cooling water flow channel of the separator to be molded.

The present invention also relates to a fuel cell produced by the above-described method. Specifically, the present invention relates to a fuel cell comprising an electrolyte, a pair of electrodes sandwiching the electrolyte, an anode-side separator having a fuel gas flow channel for supplying a fuel gas to one of the electrodes, and a cathode-side separator having an oxidant gas flow channel for supplying an oxidant gas to the other of the electrodes, wherein at least one of the anode-side separator and the cathode-side separator is produced by injection-molding a mixture comprising one or more conductive inorganic materials and one or more resins.

The fuel cell in accordance with the present invention is applicable to, for example, portable power sources, power sources for electric vehicles or domestic cogeneration systems.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE SEVERAL VIEWS OF THE DRAWING

FIG. 1 is a graph showing the relationship between the carbon number 1 in the long-chain diamine structure of polyamide represented by formula (1) and melting point (X), decomposition temperature (Y) and moldable temperature (Z) of the polyamide.
FIG. 2 is a graph showing the moisture absorption (%) of polyamide (PA1) having a structure represented by formula (1) and having a carbon number 1 of 9, polyamide (PA46) having a structure represented by formula (2), polyamide (PA6T) having a structure represented by formula (3) and polybutylene terephthalate (PBT).
FIG. 3 is a graph showing the percentage of dimensional change of polyamide PA1, polyamide PA46 and polyamide PA6T.
FIG. 4 is a graph showing the relationship (A) of polyamide PA1 between the temperature and the melt viscosity, the relationship (B) of polyamide PA6T between the temperature and the melt viscosity, and the relationship (C) of polyamide PA46 between the temperature and the melt viscosity.
FIG. 5 is a cross-sectional view illustrating the structure of an MEA.
FIG. 6 is a top plane view illustrating an oxidant gas flow channel of a separator S1 produced in Example 1 of the present invention.
FIG. 7 is a top plane view illustrating a fuel gas flow channel of the separator S1 produced in Example 1 of the present invention.
FIG. 8 is a top plane view illustrating a cooling water flow channel of a separator S2 or S3 produced in Example 1 of the present invention.
FIG. 9 is a view illustrating the position of pin gates of a mold used for producing the separator S1.
FIG. 10 is a top plane view illustrating an oxidant gas flow channel of a separator S11 produced in Example 6 of the present invention.
FIG. 11 is a top plane view illustrating a fuel gas flow channel of the separator S11 produced in Example 6 of the present invention.
FIG. 12 is a top plane view illustrating a cooling water flow channel of a separator S22 or S33 produced in Example 6 of the present invention.
FIG. 13 is a top plane view illustrating an MEA with manifold apertures formed therethrough in accordance with Example 6.
FIG. 14 is a graph showing the relationship between the output and the operating time of a fuel cell of Example 6.
FIG. 15 is a graph showing the relationship between the output and the operating time of a fuel cell of Example 7.

### DETAILED DESCRIPTION OF THE INVENTION

The present invention is mainly characterized by producing a separator by injection-molding a mixture comprising one or more resins and one or more conductive inorganic materials (hereinafter the mixture is referred to as conductive resin composition or the like) as a conductive separator used for a fuel cell.

According to injection molding, injection of the conductive resin composition takes only a moment and it is therefore possible to make tact time within 1 minute (herein, tact time refers to time required for retaining the conductive resin composition in a mold, ejecting a molded article and making a setting for the next molding). Thus, injection molding, having a shorter tact time than the above-described hot press molding, enables more inexpensive production of separators. Also, injection molding can improve the dimensional accuracy of the molded article particularly in the direction of thickness, since the shape of a mold can be basically reflected in the shape of the molded article if the mold is designed in consideration of the shrinkage, etc. of the conductive resin composition.

The conductive separator of the present invention has a relatively lower conductivity than the separator composed of a dense carbon plate or a metal plate. However, since the separator of the present invention is produced by injection molding, it does not need a cutting process which is conventionally necessary for formation of a gas flow channel or the like, so that the productivity is improved.

In order to give the separator sufficient conductivity, it is preferred to make the content of the conductive inorganic material in the conductive resin composition 60 wt% or higher. This makes the fluidity of the conductive resin composition relatively low. Thus, in preparing the conductive resin composition, the kneading process of the conductive inorganic material and resin requires an advanced kneading technique. Also, since selection of a resin having high fluidity is essential, it is preferred to use, for example, polyphenylene sulfide, liquid crystal polymer, polypropylene or polyamide.

As the conductive inorganic material, it is possible to use, for example, a carbon powder having an average particle size of 50 to 200 µm (primary particle size: 20 to 50 nm) and a carbon fiber having an average diameter of 5 to 10 µm and an average length of 100 to 10000 µm. Of these, a graphite powder, a graphite fiber, acetylene black and the like are preferred.

Of the above-mentioned resins, it is particularly preferred to use polyamide having an amide structure represented by formula (1): 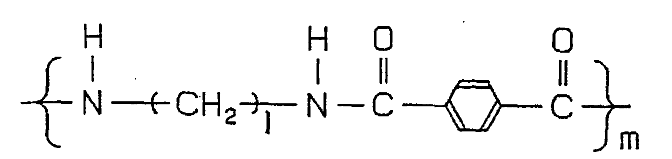 wherein 1 is an integer of 5 or more and m representing polymerization degree is an integer of 100 or more. The end of the polyamide is H, OH or the like.

Such polyamide can be synthesized from a long-chain diamine and phthalic acid, for example. In order to obtain a separator having excellent moldability, gas tightness, thermal resistance and dimensional stability, the carbon number 1 of the long-chain diamine is preferably 5 or more, and more preferably 9 or more. However, if the carbon chain is too long, the melt viscosity of polyamide becomes high, so the carbon number 1 is preferably 12 or less.

In the case of using a conductive resin composition comprising polyamide having a structure represented by formula (1), there is no need to retain the molten resin composition in a mold while heating and compressing it for a long time unlike a thermosetting resin such as epoxy resin which is retained in a mold for curing, nor does a gas evolution problem arise. Also, unlike the case of using a thermoplastic resin such as polyphenylene sulfide or liquid crystal polymer, decreased fluidity and embrittlement caused by mixing with the conductive inorganic material are suppressed and a molded article having excellent moldablity and tenacity can therefore be obtained. Further, unlike the use of polyamide having a smaller carbon number 1 of the carbon chain, the gas evolution does not occur upon molding, and the dimensional stability of the molded article is also excellent.

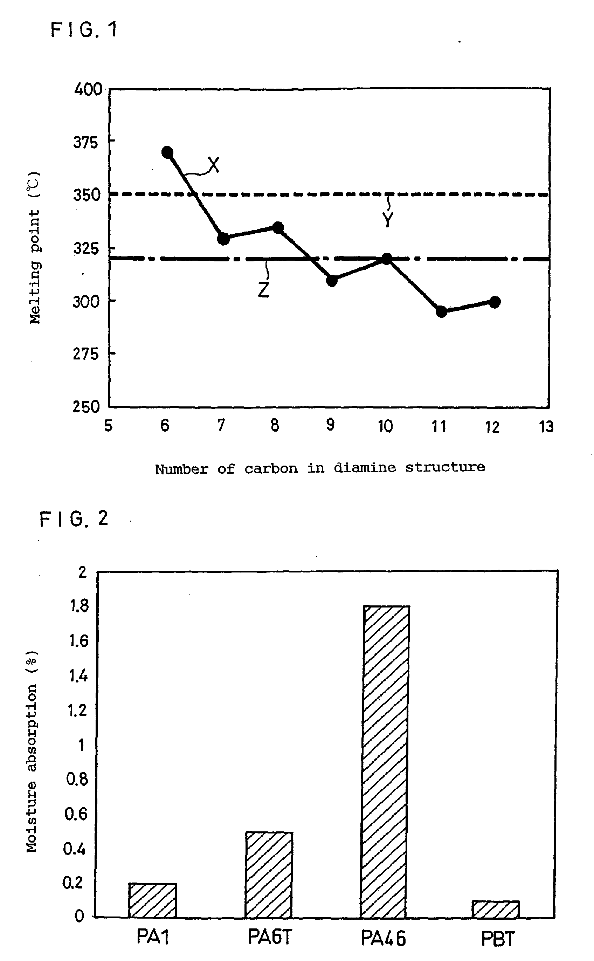

FIG. 1 shows the relationship between the carbon number 1 in the long-chain diamine structure of polyamide represented by formula (1) and melting point (X), decomposition temperature (Y) and moldable temperature (Z) of the polyamide.

The figure indicates that the moldability or the like of the polyamide having a structure represented by formula (1) can be controlled by selecting the number of carbon in the long-chain diamine structure. The use of such polyamide makes it possible to obtain a separator having favorable dimensional stability and optimal mechanical properties.

FIG. 2 shows the moisture absorption (%) of polyamide (PA1) having a structure represented by formula (1) and having a carbon number 1 of 9. FIG. 2 also shows the moisture absorption (%) of polyamide (PA46) having a structure represented by the following formula (2), the moisture absorption (%) of polyamide (PA6T) having a structure represented by the following formula (3), and, for reference, the moisture absorption (%) of polybutylene terephthalate (PTB).

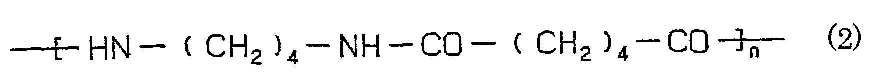

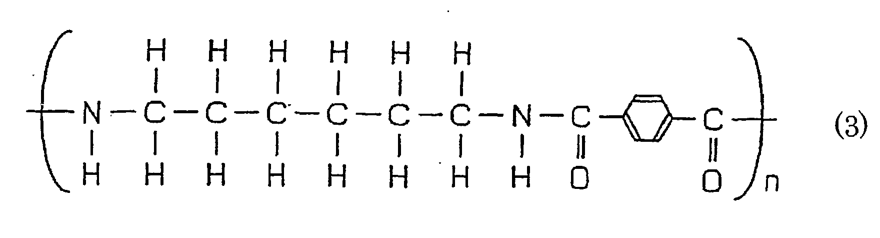

The percentage of moisture absorption was measured according to ASTM D570 method (23 °C × 24 hours).

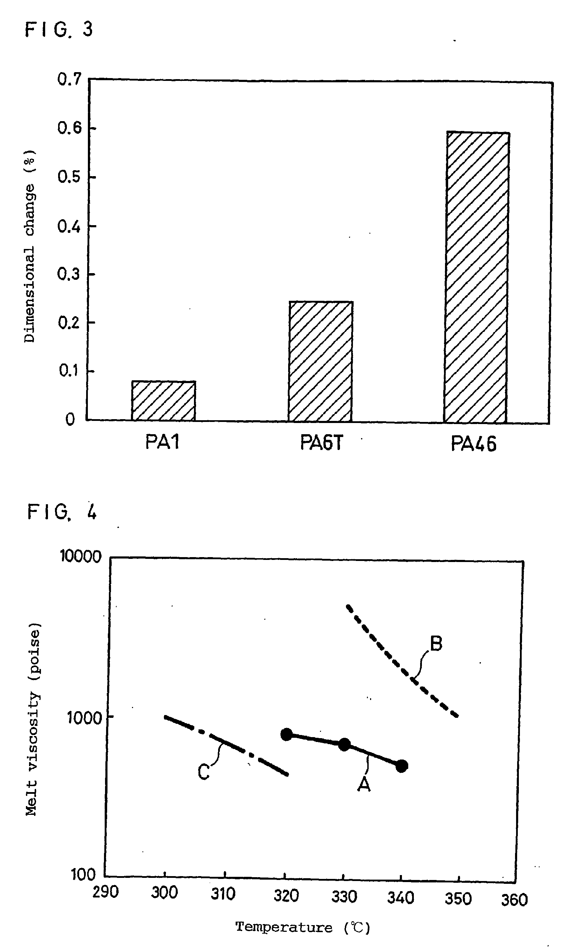

FIG. 3 shows dimensional change (%) of polyamide PA1, polyamide PA46 and polyamide PA6T. The percentage of dimensional change was measured at 23 °C by immersion in water according to ASTM D570 method.

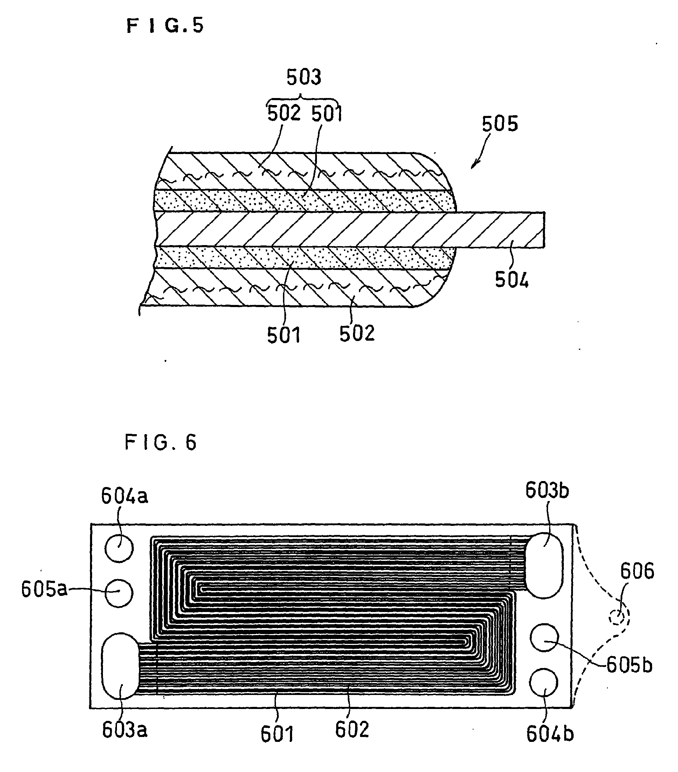

FIG. 4 shows the relationship (A) of polyamide PA1 between the temperature and the melt viscosity (poise). FIG. 4 also shows the relationship (C) of polyamide PA46 between the temperature and the melt viscosity (poise) and the relationship (B) of polyamide PA6T between the temperature and the melt viscosity (poise). The lower the viscosity of a resin is, the more favorable the moldability of the resin is.

It is preferred that the conductive resin composition be prepared by mixing one or more resins and one of more conductive inorganic materials prior to injection molding. Also, it is preferred that the conductive resin composition thus obtained be formed into pellets and that injection molding be performed with one of the pellets melted at one time

The present invention preferably uses an ultrahigh-speed injection molding machine. When the molding is difficult even with the use of the ultrahigh-speed injection molding machine, ultrasonic injection molding may be performed to greatly improve the fluidity of the conductive resin composition. In ultrasonic injection molding, injection molding is performed while the entire mold is resonated by ultrasonic vibrations. It is particularly preferred that vibrations of 10 kH or more be applied to the mold during the injection of the conductive resin composition into the mold. According to ultrasonic injection molding, since the molten conductive resin composition slips on the walls of the mold (slip occurs between the molten conductive resin composition and the walls of the mold), the conductive resin composition can be injected with reduced resistance. Therefore, in comparison with the normal injection molding, it is possible to reduce the injection speed, increase the content of the conductive inorganic material in the conductive resin composition and lower the temperature of the mold.

In order to effectively perform ultrasonic injection molding, a specific mold design is necessary for resonating the entire mold. For example, when the mold is designed such that the cavity of the mold (separator accommodating portion) corresponds to the largest displacement of an ultrasonic oscillation and the stationary portion of the mold and the injection nozzle portion correspond to the smallest displacement of the ultrasonic oscillation, ultrasonic injection molding becomes more effective. Thus, the mold is designed in consideration of the position of an ultrasonic oscillator, the distance between the ultrasonic oscillator and the mold, the amplitude and frequency of the ultrasound, or the like.

When the molding is difficult even with the use of the ultrasonic injection molding machine, injection compression molding is preferably employed. According to injection compression molding, with the mold slightly open, the conductive resin composition is charged into the mold. Then, with the mold closed, the conductive resin composition is compressed and molded. At this time, the compressive force is controlled multi-stepwise to reduce the residual stress of the conductive resin composition and warpage of the molded article, making it possible to improve the dimensional accuracy.

The present invention preferably employs an advanced mold technique. The runner of the mold desirably has a hot runner structure. The use of the hot runner mold inhibits the molten conductive resin composition to be cooled and cured at the runner, enables continuous molding and reduces waste produced at the runner.

Further, in order to improve the fluidity of the conductive resin composition upon injection, the surface of the mold walls is preferably treated with a material having a large contact angle with the molten conductive resin composition. For example, when the resin is hydrophilic, the mold walls are treated to make them water repellent, whereas when the resin is lipophilic, the mold walls are treated to make them hydrophilic. Such treatment allows the resin to slip on the mold walls.

The separator is generally thin and large in area, and it is therefore desirable to perform injection molding using a film gate. The film gate is preferably provided along the plane on which the separator-accommodating-cavity of the mold is positioned.

Further, in order to improve the fluidity of the conductive resin composition upon injection molding, it is preferred to make the flowing direction of the conductive resin composition in the mold substantially parallel to the longest linear part of the gas flow channel or cooling water flow channel of the separator to be molded. When the molten conductive resin composition is injected, it flows in a more favorable manner with increasing thickness of the separator-accommodating-cavity of the mold, and this is the reason why it is preferred to flow the conductive resin composition along the ribs of the separator to be molded which are thicker than other parts of the separator. Even when the cooling water flow channel or gas flow channel is of the serpentine type, it is also desirable to design the mold such that the substantially linear portion of the flow channel excluding turns is made substantially parallel to the flowing direction of the conductive resin composition which is injected from the gate. Also, manifold apertures perpendicular to the flowing direction of the injected conductive resin composition are desirably rounded off at their edges at least on a side closer to the gate. This is because the fluidity of the conductive resin composition is less impeded when the edges are rounded off than when they are not.

The mold may be provided with a plurality of pin gates. It is preferred to form the plurality of pin gates substantially perpendicularly to the plane on which the separator-accommodating-cavity is positioned.

### EXAMPLE 1

### (i) Production of MEA

First, the production method of an electrode 503 comprising a catalyst layer 501 and a diffusion layer 502 will be explained with reference to FIG. 5.

An acetylene black powder was allowed to carry platinum particles having an average particle size of about 3 nm to prepare a catalyst powder. The catalyst powder had a platinum content of 25 wt%. A dispersion of this catalyst powder in isopropanol was mixed with a dispersion of perfluorocarbon sulfonic acid powder in ethyl alcohol to prepare a catalyst paste. The perfluorocarbon sulfonic acid used was represented by the following formula (4): 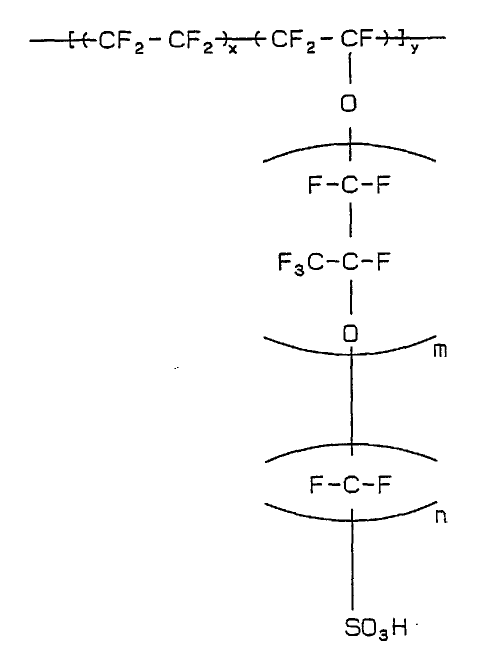 wherein 5≦x≦13.5, y≒1000, m=1, and n=2.

Separately, carbon paper serving as the diffusion layer 502 was prepared. First, a piece of carbon paper having a size of 9 cm × 20 cm and a thickness of 360 µm (TGP-H-120, manufactured by Toray Industries, Inc.) was impregnated with an aqueous dispersion of fluorocarbon resin (Neoflon ND1, manufactured by Daikin Industries, Ltd.). Subsequently, this carbon paper was dried and heated at 400 °C for 30 minutes to make it water repellent.

To one face of the carbon paper 502 thus produced, the catalyst paste was applied by screen printing to form the catalyst layer 501, which gave an electrode. At this time, part of the catalyst powder and perfluorocarbon sulfonic acid was embedded into the pores of the carbon paper.

The amount of the paste applied was adjusted so that the amount of platinum contained in the electrode became 0.5 mg/cm² and the amount of perfluorocarbon sulfonic acid became 1.2 mg/cm².

Next, a hydrogen-ion conductive polymer electrolyte membrane 504 having a size of 10 cm × 26 cm was sandwiched by a pair of electrodes in such a manner that the catalyst layers 501 of the two electrodes faced inward, and the resultant assembly was hot pressed to produce an MEA 505. The hydrogen-ion conductive polymer electrolyte membrane used was a 50 µm thick film of perfluorocarbon sulfonic acid represented by the following formula (5): 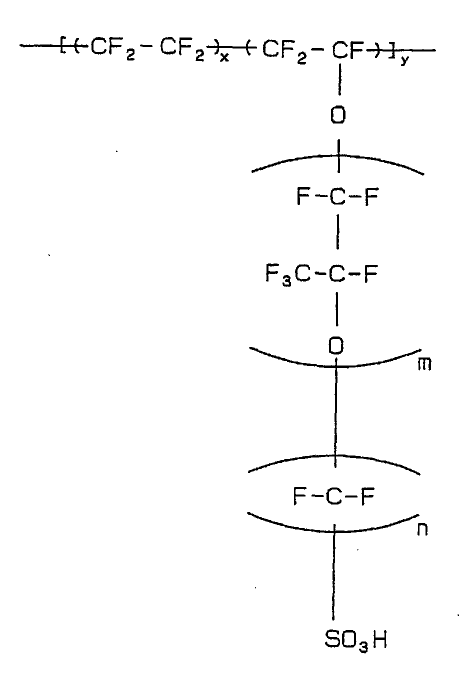 wherein 5≦x≦13.5, y≒1000, m=2, and n=2.

### (ii) Production of separator

A conductive resin composition comprising 60 wt% pitch-type graphite powder (average particle size of 100 µm), 3 wt% carbon black powder (primary particle size of 30 to 50 nm) and 37 wt% polypropylene was prepared. The conductive resin composition is hereinafter referred to as an injection molding compound or, simply, a compound. This compound was injection-molded under the following conditions to produce separators as illustrated in FIGs. 6 to 9 which were dense and had therefore no gas permeability.

The injection molding compound was dried at 80 °C for three hours and was then molded using a high-speed injection molding machine. The molding conditions were as follows:
Mold clamping force: 180 ton
Injection pressure: 320 MPa at maximum
Injection speed: 160 mm/sec at maximum
Injection time: about 5 sec
Holding pressure: about 170 MPa
Time of pressure holding: about 7 sec
Cooling time: about 50 sec
Nozzle temperature: about 250 °C
Mold temperature: about 100 °C
Cycle time: about 60 sec

As shown by the dotted line of FIG. 6, a film gate 606 was formed on a mold along the plane on which the separator-accommodating-cavity of the mold is positioned such that the injection molding compound could flow along the flow channel of the separator.

The conductivity of the separators produced in the above manner was measured and turned out to be 25 mΩ·cm, confirming that these separators had sufficient conductivity as separators for a fuel cell. With regard to the dimensional accuracy of the separators, the maximum warpage was 50 µm and the dimensional accuracy of thickness was ±25 µm. These values are sufficiently within the dimensional accuracy limit necessary for allowing gaskets to seal gases or cooling water supplied to the separators.

Produced in this example were a separator (S1) having an oxidant gas flow channel on one side and a fuel gas flow channel on the other side, a separator (S2) having an oxidant gas flow channel on one side and a cooling water flow channel on the other side, and a separator (S3) having a fuel gas flow channel on one side and a cooling water flow channel on the other side.

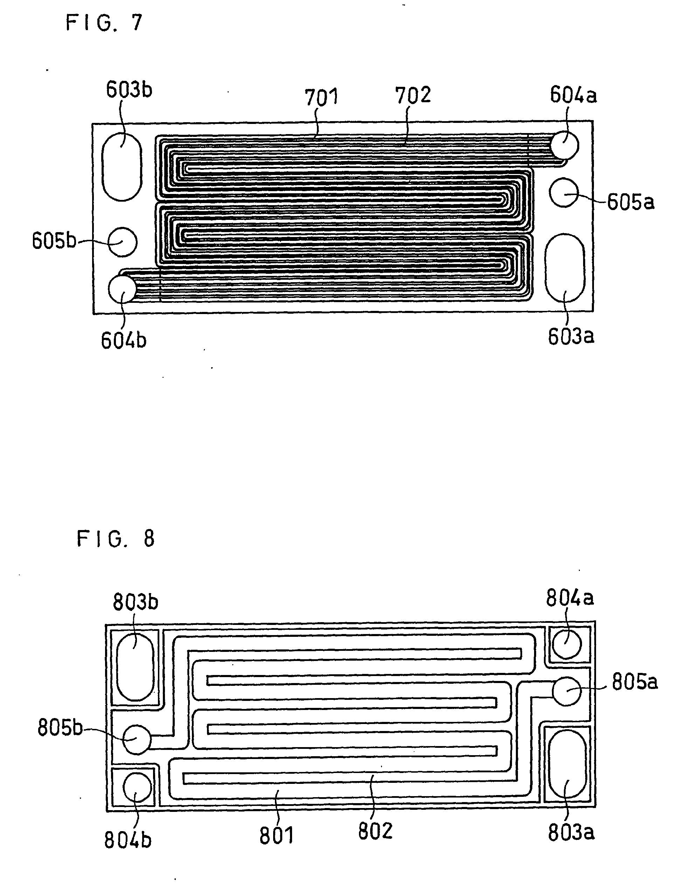

FIG. 6 is a top plane view of the oxidant gas flow channel of the separator S1, and FIG. 7 is a top plane view of the fuel gas flow channel formed on the backside thereof. FIG. 8 is a top plane view of the cooling water flow channel of the separator S2 or S3.

Each of the separators has a size of 10 cm × 26 cm and a thickness of 2 mm. Grooves 601 and 701 of the oxidant gas flow channel and fuel gas flow channel are in the form of a concave having a width of 1.9 mm and a depth of 0.7 mm through which a gas flows. Ribs 602 and 702 between the grooves are in the form of a convex having a width of 1 mm. A groove 801 of the cooling water flow channel is in the form of a concave having a width of 1.9 mm and a depth of 0.5 mm through which cooling water flows. A rib 802 between the grooves 801 is in the form of a convex having a width of 1 mm.

The separators were provided with oxidant gas inlet manifold apertures 603a and 803a, oxidant gas outlet manifold apertures 603b and 803b, fuel gas inlet manifold apertures 604a and 804a, fuel gas outlet manifold apertures 604b and 804b, cooling water inlet manifold apertures 605a and 805a, and cooling water outlet manifold apertures 605b and 805b. In all the separators, the manifold apertures of the same kind had the same size and were formed at the same position.

The separators S2 and S3 were bonded to each other with a conductive adhesive in such a manner that their cooling water flow channels faced each other. This gave a cooling-water-flow-channel-equipped separator having an oxidant gas flow channel on one side and a fuel gas flow channel on the other side.

### (iii) Working of the MEA

Manifold apertures for oxidant gas, fuel gas and cooling water were formed at predetermined positions of the hydrogen-ion conductive polymer electrolyte membrane of the MEA. Gas sealing material and O-rings comprising fluorocarbon rubber were attached to the periphery of the electrolyte membrane and the periphery of the manifold apertures.

### (iv) Production of fuel cell

A pair of separators S1 was prepared. The MEA was sandwiched by the pair of the separators in such a manner that the fuel gas flow channel of one of the separators and the oxidant gas flow channel of the other of the separators came in contact with the MEA. This gave a unit cell. Two unit cells thus produced were stacked, a cooling-water-flow-channel-equipped separator as described above was further stacked thereon, and two unit cells were further stacked thereon. This pattern was repeated to form a fuel cell stack of 100 cells.

The fuel cell stack was sandwiched by a pair of SUS end plates, with a gold-plated copper current collector plate and an insulating plate made of resin interposed between the cell stack and each of the end plates, and the end plates were clamped with clamping bolts. The clamping pressure per area of the separator was 10 kgf/cm².

### (v) Evaluation of the fuel cell

While the polymer electrolyte fuel cell thus produced was held at 80 °C, a hydrogen gas humidified and heated to have a dew point of 78 °C was supplied to the fuel gas flow channel and air humidified and heated to have a dew point of 78 °C was supplied to the oxidant gas flow channel. This resulted in a cell open-circuit voltage of 98 V at the time of no load when no current was output to outside. Also, the gas leakage of the cell stack was measured, and the leakage was below the measuring limit, demonstrating that the separators of this example had sufficient dimensional accuracy.

This fuel cell was subjected to a continuous power generation test under the conditions of a fuel utilization rate of 80%, oxygen utilization rate of 40% and current density of 0.5 A/cm² to measure variations with time in output characteristics. As a result, it was confirmed that the fuel cell of this example could maintain an output of 6 kW (67V-90A) or more over 8000 hours or more.

### EXAMPLE 2

### (i) Production of separator

An injection molding compound comprising 62 wt% natural graphite powder (average particle size of 100 µm), 3 wt% carbon black powder (primary particle size of 30 to 50 nm) and 35 wt% linear-type polyphenylene sulfide was prepared. This compound was injection-molded under the following conditions to produce separators having the same shape as those of Example 1 which were dense and had therefore no gas permeability.

The injection molding compound was dried at 80 °C for three hours and was then molded using an ultrasonic high-speed injection molding machine. The molding conditions were as follows:
Mold clamping force: 180 ton
Injection pressure: 320 MPa at maximum
Injection speed: 160 mm/sec at maximum
Injection time: about 5 sec
Holding pressure: about 170 MPa
Time of pressure holding: about 7 sec
Cooling time: about 50 sec
Nozzle temperature: about 320 °C
Mold temperature: about 240 °C
Cycle time: about 60 sec
Frequency of ultrasound applied: 19 kHz
Amplitude of ultrasound: about 20 µm

During the molding, the entire mold was resonated to produce distribution of displacement within the mold. Also, the position of the cavity was caused to correspond to the crest of the waveform of the ultrasound such that the vibration energy of the ultrasound could be given most effectively to the separator accommodated in the mold. Further, the positions of the stationary portion of the mold and the nozzle touch portion of the injection unit were caused to correspond to the node of the waveform of the ultrasound such that the vibrations were prevented from escaping outside the mold and the resonance of the mold was therefore not disturbed (herein, the node refers to a point of the waveform at which the amplitude is minimum, or a resting point located midway between the crest and trough of the waveform).

Such ultrasonic injection molding enabled the use of the compound of this example having a lower fluidity than the injection molding compound of Example 1 for producing, by injection molding, separators having the same shape as those of Example 1.

The same mold as that of Example 1 having a film gate was used in this example.

The conductivity of the separators thus produced was measured and turned out to be 20 mΩ·cm, confirming that these separators had sufficient conductivity as separators for a fuel cell. With regard to the dimensional accuracy of the separators, the maximum warpage was 50 µm and the dimensional accuracy of thickness was ±25 µm. These values are sufficiently within the dimensional accuracy limit necessary for allowing gaskets to seal gases or cooling water supplied to the separators.

### (ii) Production of fuel cell

In the same manner as in Example 1 except for the use of the separators produced in the above manner, a fuel cell comprising 100 unit cells was produced.

### (iii) Evaluation of the fuel cell

While the polymer electrolyte fuel cell thus produced was held at 80 °C, a hydrogen gas humidified and heated to have a dew point of 78 °C was supplied to the fuel gas flow channel and air humidified and heated to have a dew point of 78 °C was supplied to the oxidant gas flow channel. This resulted in a cell open-circuit voltage of 97.5 V at the time of no load when no current was output to outside. Also, the gas leakage of the cell stack was measured, and the leakage was below the measuring limit, demonstrating that the separators of this example had sufficient dimensional accuracy.

This fuel cell was subjected to a continuous power generation test under the conditions of a fuel utilization rate of 80%, oxygen utilization rate of 40% and current density of 0.5 A/cm² to measure variations with time in output characteristics. As a result, it was confirmed that the fuel cell of this example could maintain an output of 6 kW (66V-90A) or more over 8000 hours or more.

### EXAMPLE 3

### (i) Production of separator

An injection molding compound comprising 60 wt% natural graphite powder (average particle size of 100 µm), 2 wt% pitch-type graphite fiber (average diameter of 7 µm and average length of 6 mm), 3 wt% carbon black powder, and 35 wt% liquid crystal polymer was prepared. This compound was injection-molded under the following conditions to produce separators having the same shape as those of Example 1 which were dense and had therefore no gas permeability.

First, with the mold slightly open, the injection molding compound was injected into the mold. Then, with the mold closed, the compound was compressed and molded. The compressive force was varied multi-stepwise to reduce the residual stress of the molded article.

The injection molding compound was dried at 80 °C for three hours and was then molded using an injection compression molding machine. The molding conditions were as follows:
Mold compressive force after injection: 250 ton
Injection pressure: 300 MPa at maximum
Injection speed: 80 mm/sec at maximum
Injection time: about 5 sec
Time of pressure holding: about 50 sec
Nozzle temperature: about 300 °C
Mold temperature: about 200 °C
Cycle time: about 60 sec

Such injection compression molding enabled the use of the compound of this example having a lower fluidity than the injection molding compound of Example 2 for producing, by injection molding, separators having the same shape as those of Example 1.

The same mold as that of Example 1 having a film gate was used in this example.

The conductivity of the separators thus produced was measured and turned out to be 22 mΩ·cm, confirming that these separators had sufficient conductivity as separators for a fuel cell. Also, the dimensional accuracy of the separators was greatly improved, so that the maximum warpage was 50 µm and the dimensional accuracy of thickness was as high as ±15 µm.

### (ii) Production of fuel cell

In the same manner as in Example 1 except for the use of the separators produced in the above manner, a fuel cell comprising 100 unit cells was produced.

### (iii) Evaluation of the fuel cell

While the polymer electrolyte fuel cell thus produced was held at 80 °C, a hydrogen gas humidified and heated to have a dew point of 78 °C was supplied to the fuel gas flow channel and air humidified and heated to have a dew point of 78 °C was supplied to the oxidant gas flow channel. This resulted in a cell open-circuit voltage of 97 V at the time of no load when no current was output to outside. Also, the gas leakage of the cell stack was measured, and the leakage was below the measuring limit, demonstrating that the separators of this example had sufficient dimensional accuracy.

This fuel cell was subjected to a continuous power generation test under the conditions of a fuel utilization rate of 80%, oxygen utilization rate of 40% and current density of 0.5 A/cm² to measure variations with time in output characteristics. As a result, it was confirmed that the fuel cell of this example could maintain an output of 6 kW (66V-90A) or more over 8000 hours or more.

### EXAMPLE 4

### (i) Production of separator

An injection molding compound comprising 60 wt% pitch-type graphite powder (average particle size of 100 µm), 2 wt% pitch-type graphite fiber (average diameter of 7 µm and average length of 6 mm), 3 wt% carbon black powder (primary particle size of 30 to 50 nm), and 35 wt% polyamide represented by the forementioned formula (1) wherein 1=9, was prepared. This compound was injection-molded under the following conditions to produce separators having the same shape as that of Example 1 which were dense and had therefore no gas permeability.

The injection molding compound was dried at 80 °C for three hours and was then molded using a mold with a hot runner and a high-speed injection molding machine. The molding conditions were as follows:
Mold clamping force: 180 ton
Injection pressure: 320 MPa at maximum
Injection speed: 160 mm/sec at maximum
Injection time: about 5 sec
Holding pressure: about 170 MPa
Time of pressure holding: about 7 sec
Cooling time: about 50 sec
Nozzle temperature: about 280 °C
Gate temperature: about 270 °C upon injection
Mold temperature: about 200 °C
Cycle time: about 60 sec

Such injection molding enabled the use of the compound of this example having a lower fluidity than the injection molding compound of Example 1 for producing, by injection molding, separators having the same shape as those of Example 1.

The same mold as that of Example 1 having a film gate was used in this example.

The conductivity of the separators thus produced was measured and turned out to be 22 mΩ·cm, confirming that these separators had sufficient conductivity as separators for a fuel cell.

### (ii) Production of fuel cell

In the same manner as in Example 1 except for the use of the separators produced in the above manner, a fuel cell comprising 100 unit cells was produced.

### (iii) Evaluation of the fuel cell

While the polymer electrolyte fuel cell thus produced was held at 80 °C, a hydrogen gas humidified and heated to have a dew point of 78 °C was supplied to the fuel gas flow channel and air humidified and heated to have a dew point of 78 °C was supplied to the oxidant gas flow channel. This resulted in a cell open-circuit voltage of 97 V at the time of no load when no current was output to outside. Also, the gas leakage of the cell stack was measured, and the leakage was below the measuring limit, demonstrating that the separators of this example had sufficient dimensional accuracy.

This fuel cell was subjected to a continuous power generation test under the conditions of a fuel utilization rate of 80%, oxygen utilization rate of 40% and current density of 0.5 A/cm² to measure variations with time in output characteristics. As a result, it was confirmed that the fuel cell of this example could maintain an output of 6 kW (66V-90A) or more over 8000 hours or more.

### EXAMPLE 5

### (i) Production of separator

An injection molding compound comprising 60 wt% pitch-type graphite powder (average particle size of 100 µm), 3 wt% carbon black powder (primary particle size of 30 to 50 nm), and 37 wt% polypropylene was prepared. This compound was injection-molded under the following conditions to produce separators having the same shape as those of Example 1 which were dense and had therefore no gas permeability.

The injection molding compound was dried at 80 °C for three hours and was then molded using a high-speed injection molding machine. The molding conditions were as follows:
Mold clamping force: 180 ton
Injection pressure: 320 MPa at maximum
Injection speed: 160 mm/sec at maximum
Injection time: about 5 sec
Holding pressure: about 170 MPa
Time of pressure holding: about 7 sec
Cooling time: about 50 sec
Nozzle temperature: about 320 °C
Mold temperature: about 240 °C
Cycle time: about 60 sec

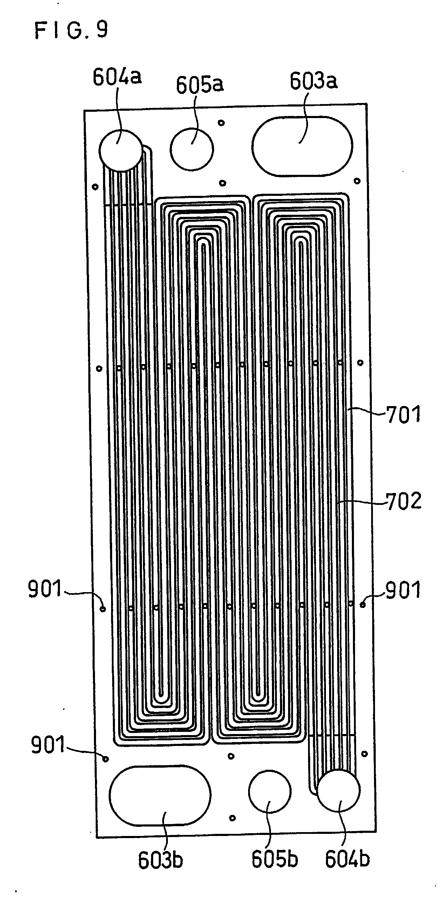

Injection molding was performed using a mold having 31 pin gates substantially perpendicular to its separator-accommodating-cavity such that the molten compound could flow along the flow path of the separator. In the production of the separator S1, for example, pin gates were provided to the mold at positions corresponding to the positions 901 of a fuel gas flow channel indicated in FIG. 9.

The conductivity of the separators thus produced was measured and turned out to be 20 mΩ·cm, confirming that these separators had sufficient conductivity as separators for a fuel cell. With regard to the dimensional accuracy of the separators, the maximum warpage was 50 µm and the dimensional accuracy of thickness was ±25 µm. These values are sufficiently within the dimensional accuracy limit necessary for sealing gases or cooling water supplied to the separators.

### (ii) Production of fuel cell

In the same manner as in Example 1 except for the use of the separators produced in the above manner, a fuel cell comprising 100 unit cells was produced.

### (iii) Evaluation of the fuel cell

While the polymer electrolyte fuel cell thus produced was held at 80 °C, a hydrogen gas humidified and heated to have a dew point of 78 °C was supplied to the fuel gas flow channel and air humidified and heated to have a dew point of 78 °C was supplied to the oxidant gas flow channel. This resulted in a cell open-circuit voltage of 97.5 V at the time of no load when no current was output to outside. Also, the gas leakage of the cell stack was measured, and the leakage was below the measuring limit, demonstrating that the separators of this example had sufficient dimensional accuracy.

This fuel cell was subjected to a continuous power generation test under the conditions of a fuel utilization rate of 80%, oxygen utilization rate of 40% and current density of 0.5 A/cm² to measure variations with time in output characteristics. As a result, it was confirmed that the fuel cell of this example could maintain an output of 6 kW (66V-90A) or more over 8000 hours or more.

### EXAMPLE 6

### (i) Production of MEA

First, a catalyst paste having the same composition as that of Example 1 was prepared. A piece of carbon paper which was the same as that of Example 1 was used as the diffusion layer, but this carbon paper had a size of 8 cm × 20 cm. The carbon paper was made water repellent in the same manner as in Example 1. The catalyst paste was applied to one face of the carbon paper by screen printing to form a catalyst layer. This gave an electrode. At this time, part of the catalyst powder and perfluorocarbon sulfonic acid was embedded into the pores of the carbon paper. The amount of the paste applied was adjusted so that the amount of platinum contained in the electrode became 0.5 mg/cm² and the amount of perfluorocarbon sulfonic acid became 1.2 mg/cm².

Next, a hydrogen-ion conductive polymer electrolyte membrane having a size of 10 cm × 20 cm was sandwiched by a pair of electrodes in such a manner that the catalyst layers of the two electrodes faced inward, and the resultant assembly was hot pressed to produce an MEA. The hydrogen-ion conductive polymer electrolyte membrane used in this example was also the same as that of Example 1.

### (ii) Production of separator

An injection molding compound was prepared by sufficiently heating and kneading 40 wt% graphite fiber (average diameter of 50 µm and average length of 0.5 mm), 40 wt% acetylene black, and 20 wt% polyamide having an amide structure represented by the following formula (1):

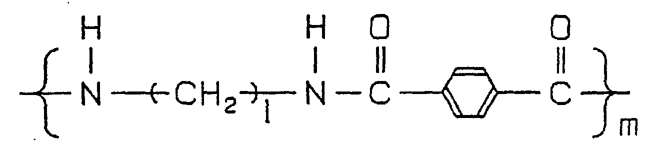

This compound was injection-molded under the following conditions to produce separators which were dense and had therefore no gas permeability.
Mold clamping force: 180 ton
Injection pressure: 320 MPa at maximum
Injection speed: 160 mm/sec at maximum
Injection time: about 5 sec
Holding pressure: about 170 MPa
Time of pressure holding: about 7 sec
Cooling time: about 50 sec
Nozzle temperature: about 280 °C
Gate temperature: about 270 °C upon injection
Mold temperature: about 200 °C
Cycle time: about 60 sec

The same mold as that of Example 1 having a film gate was used in this example.

In the above-described polyamide, when the carbon number 1 was less than 9, the melting point of the polyamide became close to its decomposition temperature, so gas evolution or the like occurred, impairing the stability of injection molding. When the carbon number 1 was 9 or more, on the other hand, it was possible to obtain separators having a lower percentage of moisture absorption than the conventional polyamide (PA46 and PA6T) just like PBT and high dimensional stability. Also, the melt viscosity of the injection molding compound successfully reached a level equivalent to that of PBT.

Produced in this example were a separator (S11) having an oxidant gas flow channel on one side and a fuel gas flow channel on the other side, a separator (S22) having an oxidant gas flow channel on one side and a cooling water flow channel on the other side, and a separator (S33) having a fuel gas flow channel on one side and a cooling water flow channel on the other side.

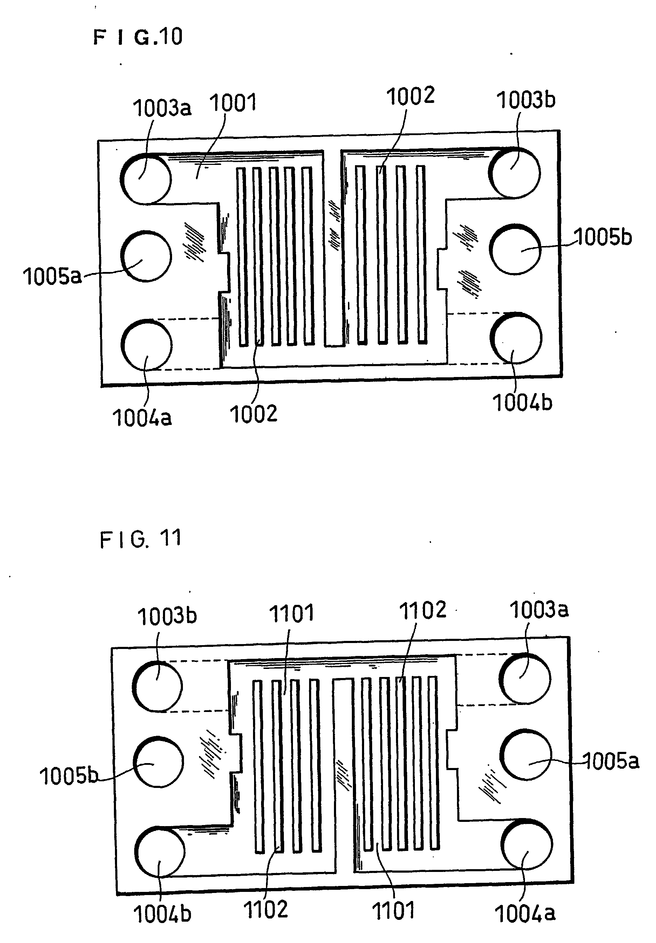

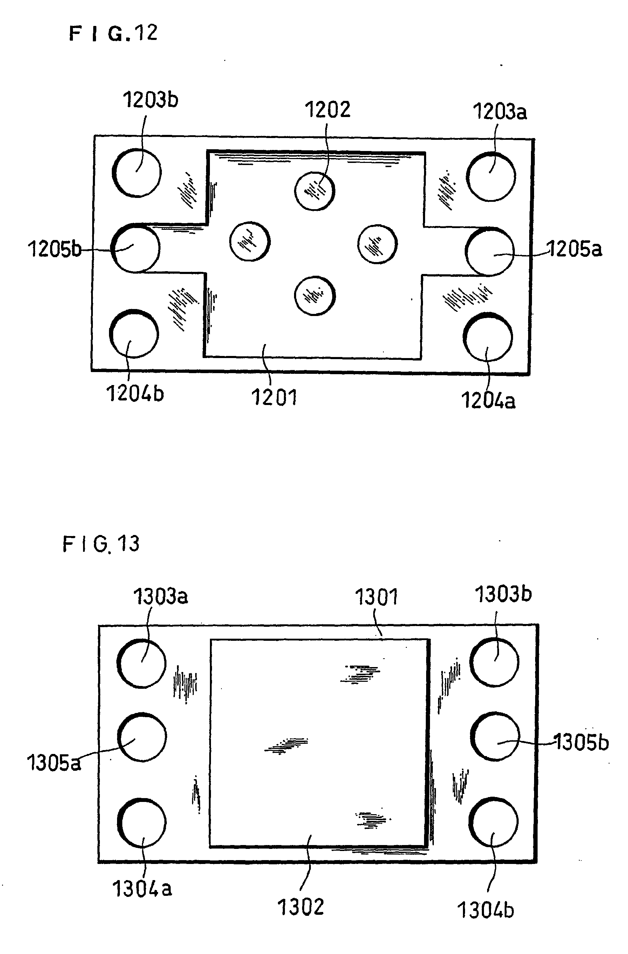

FIG. 10 is a top plane view of the oxidant gas flow channel of the separator S11, and FIG. 11 is a top plane view of the fuel gas flow channel formed on the backside thereof. FIG. 12 is a top plane view of the cooling water flow channel of the separator S22 or S33.

Each of the separators has a size of 10 cm × 20 cm and a thickness of 4 mm. Grooves 1001 and 1101 of the oxidant gas flow channel and fuel gas flow channel are in the form of a concave having a width of 2 mm and a depth of 1.5 mm through which a gas flows. Ribs 1002 and 1102 between the grooves are in the form of a convex having a width of 1 mm. A groove 1201 of the cooling water flow channel is in the form of a concave having a depth of 1.5 mm through which cooling water flows. A circular convex 1202 formed in the groove 1201 plays a role of splitting cooling water.

The separators were provided with oxidant gas inlet manifold apertures 1003a and 1203a, oxidant gas outlet manifold apertures 1003b and 1203b, fuel gas inlet manifold apertures 1004a and 1204a, fuel gas outlet manifold apertures 1004b and 1204b, cooling water inlet manifold apertures 1005a and 1205a, and cooling water outlet manifold apertures 1005b and 1205b. In all the separators, the manifold apertures of the same kind had the same size and were formed at the same position.

The separators S22 and S33 were bonded to each other with a conductive adhesive in such a manner that their cooling water flow channels faced each other. This gave a cooling-water-flow-channel-equipped separator having an oxidant gas flow channel on one side and a fuel gas flow channel on other side.

### (iii) Working of the MEA

As shown in FIG. 13, an oxidant gas inlet manifold aperture 1303a, an oxidant gas outlet manifold aperture 1303b, a fuel gas inlet manifold aperture 1304a, a fuel gas outlet manifold aperture 1304b, a cooling water inlet manifold aperture 1305a, and a cooling water outlet manifold aperture 1305b were formed at predetermined positions of the hydrogen-ion conductive polymer electrolyte membrane 1301 of the MEA. These manifold apertures had the same size as the manifold apertures of the same kind formed in the separators and were formed at the same position as in the separators. Next, gas sealing material and O-rings were attached to the periphery of the electrolyte membrane and the periphery of the manifold apertures.

### (iv) Production of fuel cell

A pair of separators S11 was prepared. The MEA was sandwiched by the pair of the separators in such a manner that the fuel gas flow channel of one of the separators and the oxidant gas flow channel of the other of the separators came in contact with the MEA. This gave a unit cell. Two unit cells thus produced were stacked, a cooling-water-flow-channel-equipped separator as described above was further stacked thereon, and two unit cells were further stacked thereon. This pattern was repeated to form a fuel cell stack of 50 cells.

The fuel cell stack was sandwiched by a pair of SUS end plates with a gold-plated stainless steel current collector plate and an insulating plate made of resin interposed between the cell stack and each of the end plates, and the end plates were clamped with clamping bolts. The clamping pressure per area of the separator was 10 kgf/cm².

### (v) Evaluation of the fuel cell

While the polymer electrolyte fuel cell thus produced was held at 85 °C, a hydrogen gas humidified and heated to have a dew point of 83 °C was supplied to the fuel gas flow channel and air humidified and heated to have a dew point of 78 °C was supplied to the oxidant gas flow channel. This resulted in a cell open-circuit voltage of 50 V at the time of no load when no current was output to outside. Also, the gas leakage of the cell stack was measured, and the leakage was below the measuring limit, demonstrating that the separators of this example had sufficient dimensional accuracy.

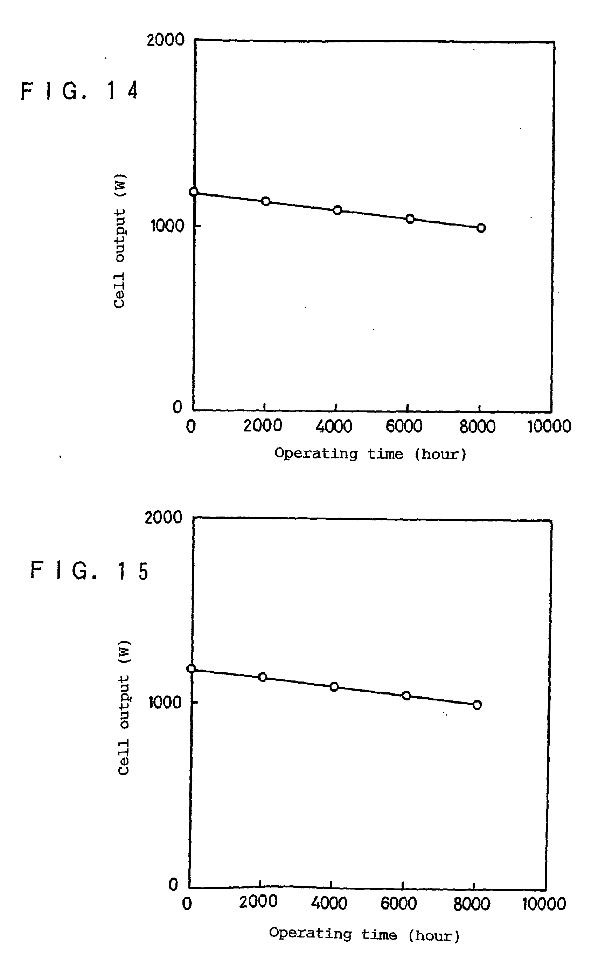

This fuel cell was subjected to a continuous power generation test under the conditions of a fuel utilization rate of 80%, oxygen utilization rate of 40% and current density of 0.5 A/cm² to measure variations with time in output characteristics. The results are shown in FIG. 14. It was confirmed from FIG. 14 that the fuel cell of this example could maintain an output of 1000 W (22V-45A) or more over 8000 hours or more.

### EXAMPLE 7

Separators were produced in the same manner as in Example 6 except for the use of polyamide having a structure represented by the formula (1) and having a carbon number 1 of 11 as the resin used for the injection molding compound. Using these separators, a fuel cell was produced in the same manner as in Example 6.

While the polymer electrolyte fuel cell thus produced was held at 85 °C, a hydrogen gas humidified and heated to have a dew point of 83 °C was supplied to the fuel gas flow channel and air humidified and heated to have a dew point of 78 °C was supplied to the oxidant gas flow channel. This resulted in a cell open-circuit voltage of 50 V at the time of no load when no current was output to outside. Also, the gas leakage of the cell stack was measured, and the leakage was below the measuring limit, demonstrating that the separators of this example had sufficient dimensional accuracy.

This fuel cell was subjected to a continuous power generation test under the conditions of a fuel utilization rate of 80%, oxygen utilization rate of 40% and current density of 0.5 A/cm² to measure variations with time in output characteristics. The results are shown in FIG. 15. It was confirmed from FIG. 15 that the fuel cell of this example could maintain an output of 1000 W (22V-45A) or more over 8000 hours or more.

It is noted that the compound of this example had superior moldability and that the separators of this example had superior dimensional accuracy to the separators of Example 6.

As described in Examples 1 to 7, according to the present invention, a mixture comprising one or more conductive inorganic materials and one or more resins (conductive resin composition or injection molding compound) is injected into a mold to produce a separator having a gas flow channel or a cooling water flow channel, whereby it is possible to significantly reduce the manufacturing cost in comparison with the conventional production methods of separators which are costly. Further, according to the present invention, it is possible to drastically improve the dimensional accuracy of a molded article (separator) in comparison with the production of separators according to the conventional hot press molding method or the like.

As described in Examples 6 and 7, in particular, according to the present invention, the use of predetermined polyamide as a resin further improves moldability of the injection molding compound and dimensional accuracy of separators and therefore has a large effect on improvement of yields in production of fuel cells.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

## Claims

1. A method of producing a fuel cell comprising the steps of:
(A) molding a separator having a gas flow channel and/or a cooling water flow channel by injection molding process having a step of injecting a mixture comprising one or more conductive inorganic materials and one or more resins into a mold;
(B) producing an assembly comprising an electrolyte and a pair of electrodes sandwiching said electrolyte; and
(C) combining said separator with said assembly to produce a fuel cell.

2. The method of producing a fuel cell in accordance with claim 1, wherein said step (A) comprises a step of injecting said mixture into said mold while applying a vibration of 10 kHz or more to said mold.

3. The method of producing a fuel cell in accordance with claim 1 or claim 2, wherein said injection molding process is injection compression molding.

4. The method of producing a fuel cell in accordance with any of claims 1 to 3, wherein said mold has a film gate, and said film gate is formed along a plane on which a separator-accommodating-cavity of said mold is positioned.

5. The method of producing a fuel cell in accordance With any preceding claim, wherein said mold has a plurality of pin gates, and said plurality of pin gates are formed substantially perpendicularly to a plane on which a separator-accommodating-cavity of said mold is positioned.

6. The method of producing a fuel cell in accordance with any preceding claim, wherein said mold is a hot runner mold.

7. The method of producing a fuel cell in accordance with any preceding claim, wherein said one or more resins comprise one or more thermoplastic resins.

8. The method of producing a fuel cell in accordance with claim 7, wherein said thermoplastic resin is at least one selected from the group consisting of polyphenylene sulfide, liquid crystal polymer, polypropylene and polyamide.

9. The method of producing a fuel cell in accordance with claim 8, wherein said polyamide has an amide structure represented by the following formula: 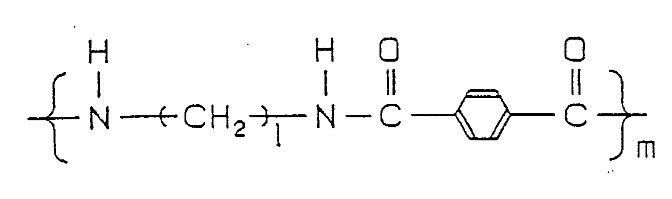 wherein 1 is an integer of 5 or more and m representing polymerization degree is an integer of 100 or more.

10. The method of producing a fuel cell in accordance With any preceding claim, wherein said one or more conductive inorganic materials comprise graphite.

11. The method of producing a fuel cell in accordance with any preceding claim, wherein said mixture flows in said mold in a direction substantially parallel to the longest linear part of said gas flow channel or cooling water flow channel of the separator to be molded.

12. A fuel cell comprising an electrolyte, a pair of electrodes sandwiching said electrolyte, an anode-side-separator having a fuel gas flow channel for supplying a fuel gas to one of the electrodes, and a cathode-side separator having an oxidant gas flow channel for supplying an oxidant gas to the other of the electrodes, wherein at least one of said anode-side separator and said cathode-side separator is produced by injection-molding a mixture comprising one or more conductive inorganic materials and one or more resins.
